# EUROPEAN PATENT APPLICATION

(11) **EP 3 389 201 A1**
(43) Date of publication of application: **17.10.2018**
(21) Application number: 17166502.9
(22) Date of filing: 13.04.2017
(51) Int. Cl.: H04J 3/16, H04J 3/14

(54) **METHOD FOR OPERATING A NETWORK ELEMENT OF AN OPTICAL TRANSPORT NETWORK, OTN, AND NETWORK ELEMENT**

(71) Applicant: Nokia Solutions and Networks Oy, 02610 Espoo (FI)
(72) Inventor: LOSCHER, Jürgen, 70435 Stuttgart (DE); THOMAS, Wolfgang, 70435 Stuttgart (DE)
(74) Representative: DREISS Patentanwälte PartG mbB

(57) **Abstract**

It is proposed a method for operating a network element of an optical transport network, OTN; wherein a general communication channel employs a transmission of one or more pre-determined idle patterns at idle times of general communication channels; wherein the method comprises: receiving (602) data on the incoming general communication channel; determining a deterioration of the incoming general communication channel; and transmitting (606) a deterioration pattern at idle times on the outgoing general communication channel in dependence on the determination of the deterioration of the incoming general communication channel, wherein the deterioration pattern is different from the pre-determined idle pattern.

## Description

### Field of the invention

The present document relates to Optical Transport Networks (OTNs). In particular, the present document relates to the detection of a failure within a general communication channel of an OTN.

### Background

The communication between OTN network elements may be performed using embedded general communication channels called GCC (General Communication Channels). The OTN standards do not define any supervision for these general communication channels on the physical layer, i.e. it is assumed that either the complete signal, in which the GCCs are embedded, is impaired, or that the detection of a failure of a GCC is left to a higher communication layer (e.g. to layer 2 using PPP (Point-to-Point Protocol) or to layer 3 using OSPF (Open Shortest Path First Protocol)).

In a case where a GCC is impaired, but the server signal (e.g. an Optical channel Data Unit, ODU, comprising the GCC) is not impaired, the failure detection is typically slow (in the range of several seconds), as only the link layer or higher layer software protocols supervise the general communication channel. This can lead to slow reactions (e.g. for triggering GCC protection, or for triggering rerouting). These self-healing actions should, however, be executed within relatively short time intervals (e.g. within 50 ms from the occurrence of a failure), which currently is not the case (the triggering of self-healing actions currently requires in the range of several seconds from the occurrence of a failure). As a result of this, the ability of the OTN network elements (NEs) to communicate with other network components is impaired. This, however, can lead to serious problems for a control plane of the OTN, as the delay of the activation of self-healing actions, such as ECC and/or rerouting, can delay network traffic restoration.

### Summary

According to an aspect, a method for operating a network element of an optical transport network, OTN, is described. A general communication channel employs a transmission of one or more pre-determined idle patterns at idle times of general communication channels. The method comprises: receiving data on the incoming general communication channel; determining a deterioration of the incoming general communication channel; and transmitting a deterioration pattern at idle times on the outgoing general communication channel in dependence on the determination of the deterioration of the incoming general communication channel, wherein the deterioration pattern is different from the pre-determined idle pattern.

Advantageously, a communication can be re-established based on a fast re-route, which will be initiated by a distant network element, from which the incoming general communication channel is received. Therefore, deterioration can be counteracted very quickly and it is established a high availability for network restoration events, traffic management, alarming and a control plane.

According to an advantageous embodiment the determination of the deterioration of the incoming general communication channel comprises: determining a bit error rate in dependence on the incoming general communication channel; and determining the deterioration if the bit error rate exceeds a bit error rate threshold.

According to an advantageous embodiment the method further comprises: transmitting data on a second outgoing general communication channel in dependence on the determination of the deterioration of the incoming general communication channel.

According to an advantageous embodiment the second outgoing general communication channel is associated with another optical transport unit, OTU, trail than the outgoing general communication channel for the transmission of the deterioration pattern.

According to an advantageous embodiment the method further comprises: stopping a transmission of data on the outgoing general communication channel but maintains the transmission of the deterioration pattern on the outgoing general communications channel.

According to an advantageous embodiment the general communication channel is a General Communication Channel, GCC, of an Optical channel Data Unit, ODU, Overhead.

According to an advantageous embodiment the general communication channel employs a High-Level Data Link Control, HDLC, framed data link protocol.

According to an advantageous embodiment the general communication channel employs a HDLC-framed Point-to-Point protocol, PPP.

According to an advantageous embodiment the pre-determined idle pattern comprises a pre-determined bit sequence. The pre-determined bit sequence comprises the bit sequence '01111110'.

According to a further aspect, a network element for an optical transport network, OTN, is described. A general communication channel employs a transmission of one or more pre-determined idle patterns at idle times of general communication channels. The network element is configured to: receive data on the incoming general communication channel; determine a deterioration of the incoming general communication channel; and to transmit a deterioration pattern at idle times on the outgoing general communication channel in dependence on the determination of the deterioration of the incoming general communication channel, wherein the deterioration pattern is different from the pre-determined idle pattern.

### Brief description of the figures

Fig. 1 shows the information structure for OTN interfaces;
Fig. 2a, Fig. 2b shows the structure of an OTH or OTN optical channel data unit;
Fig. 3 shows a flow chart of an example method for detecting an impairment of a general communication channel of an OTN;
Fig. 4 shows a block diagram of an example OTN; and
Fig. 5a shows a block diagram of an example OTN network element;
Fig. 5b illustrates example data of a general communication channel;
Fig. 6 shows a flow chart of a method to operate a network element; and
Fig. 7 shows a block diagram of an example OTN.

### Description of the embodiments

The present description addresses the technical problem of fast impairment detection within a general communication channel, notably within a GCC, of an OTN. An OTN may be used to transport various different types of data traffic (also referred to as client signals) over a DWDM (Dense Wavelength Division Multiplex) network in a transparent manner. This transparent transport method has been defined in the ITU-T recommendation G.709 and is also known as Optical Transport Hierarchy (OTH). OTH is positioned as a server layer for various client signals, e.g. SDH/SONET, ATM and/or Ethernet. The frame structure defined in G.709 comprises four parts: 1. the optical channel payload unit-k (OPUk), where the payload is mapped into; 2. the Optical channel Data Unit (ODUk), which contains the OPUk and additional overhead bytes (referred to the ODU overhead) which have particular services and functions attached to them; The ODU overhead comprises two general communication channels; 3. the optical transport unit (OTUk), which contains the ODUk plus additional framing bytes; and 4. a forward error correction (FEC) code. The OTUk-OH comprises one general communication channel.

It is to be noted that the parameter k represents the line rate of the OTH, i.e. k = 1 stands for approx. 2.6 Gb/s, k = 2 for approx. 10.7 Gb/s and k = 3 for approx. 43 Gb/s. The different ODUs are able to transport e.g. STM-16, STM-64 and STM-256 signals, respectively.

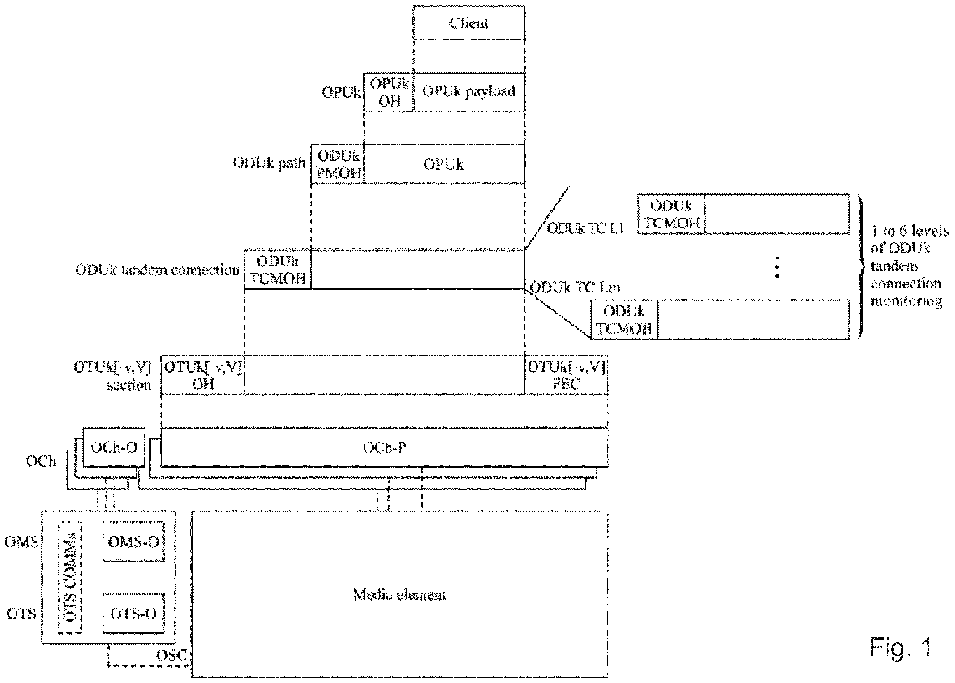

As an example, Fig. 1 illustrates the information structure for OTN interfaces represented by information containment relationships according to ITU-T G.709/Y,1331 (06/2016). For supervision purposes in OTN interfaces with optical layer overhead, the OTUk/OTUk-v/OTUkV signal is terminated whenever the OCh signal is terminated and the OTUCn signal may be terminated when the OTSiA signal is terminated. For supervision purposes in OTN interfaces without optical layer overhead, the OTUk/OTUk-v/OTUkV and OTUCn signals are terminated whenever the interface signal is terminated.

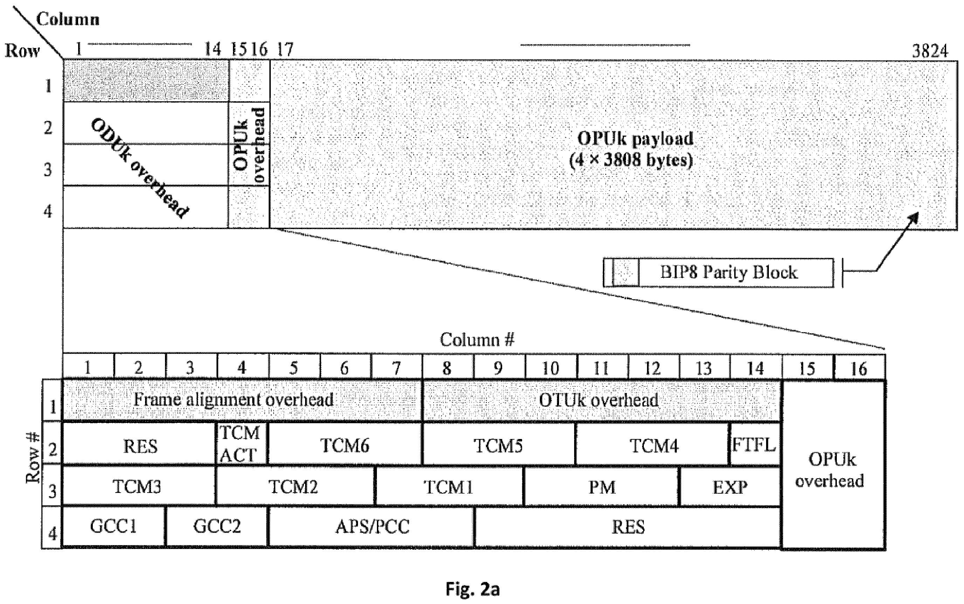

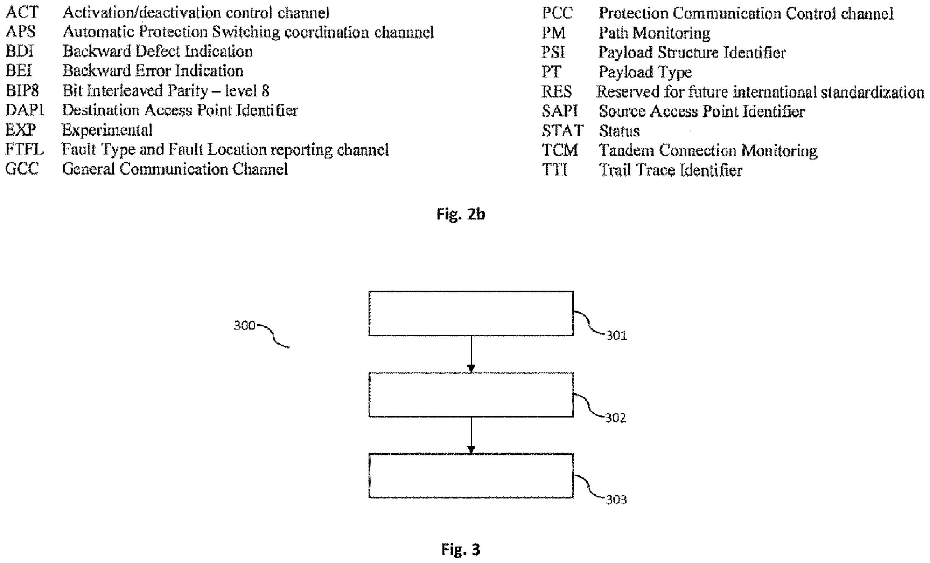

Fig. 2a, Fig. 2b shows the structure of an ODUk overhead as currently specified by ITU-T G.709. Similar to the overhead bytes known from SDH, the ODUk overhead bytes are used to provide services within an OTH network. Example ODU overhead bytes provide General Communication Channels (GCC1 and GCC2) for providing information or requests to the control plane and for enabling a communication between different OTN network elements; Automatic Protection Switching coordination channel (APS) and/or Protection Communication Control channel (PCC) for providing switching capabilities at the OTH level; Bytes related to signaling faults within an OTH network, such as the Fault Type and Fault Location reporting channel (FTFL).

Within the G.709 specification, these bytes or channels are mainly used for services on the OTH network level. The OTH network is therefore transparent with respect to the client signals, such as SDH or Ethernet.

As outlined above, the OTH or OTN standards do not specify a mechanism for detecting an impairment of channels within the ODUk overhead, notably within the GCCs. A GCC failure therefore needs to be detected by monitoring the quality of the server signal (i.e. of the ODUs as a whole) and/or by higher layer networking protocols, such as PPP and OSPF. As a result of this, failure detection within the GCCs is delayed.

The standard (notably ITU-T G.7712) defines that GCCs use HDLC-framed PPP (as defined in RFC 1662) as a data link protocol. PPP makes use of PPP frames comprising a protocol field and an information field. In case of HDLC-framed PPP, the framing mechanism of the synchronous data link layer protocol High-Level Data Link Control (HDLC) is used, which enables the resulting HDLC frames to be transmitted over synchronous or asynchronous links. This is achieved by using a frame delimiter, or flag, which comprises a unique sequence of bits that is guaranteed not to be comprised within a HDLC frame. In a preferred example, this frame delimiter sequence is '01111110', or, in hexadecimal notation, 0x7E.

Each HDLC frame begins and ends with a frame delimiter. A frame delimiter at the end of a frame may also mark the start of the next frame. When no frames are being transmitted (notably on a simplex or full-duplex synchronous link), a frame delimiter must be transmitted continuously on the link.

In other words, in order to separate PDUs (packet data units) or frames, so called flag-sequences or frame delimiter sequences are sent. These flag-sequences are typically also sent in idle times. Consequently, the absence or corruption of flag-sequences may be used as an indicator that the corresponding GCC has failed. In other words, it is proposed in the present document to enable a network element to monitor the flag-sequences between PDUs on a GCC of an OTN. It is determined whether at least one valid flag-sequence is received within a pre-determined period of time. If this is not the case, this may be taken as an indication for the fact that the GCC has failed. This detection works fast, reliable, and independent of the root cause of the GCC failure, such as a server signal failure, a corruption of the GCC connection, or a GCC source failure.

In reaction to the detection of a GCC failure, countermeasures, such as the triggering of ECC and/or the triggering of rerouting mechanisms, may be initiated by the network element.

It should be noted that even though the present document focuses on the detection of a GCC failure, the failure detection mechanism which is described in the present document may be applied to general types of networking interfaces, which make use of the transmission of pre-determined idle patterns.

Fig. 3 shows a flow chart of an example method 300 for detecting an impairment of a general communication channel within an optical transport network (OTN). The general communication channel may be a logical communication channel. The general communication channel employs the transmission of one or more pre-determined idle patterns at idle times of the general communication channel. The method 300 comprises receiving 301 data on the general communication channel. Furthermore, the method 300 comprises detecting 302 an impairment of the general communication channel by detecting that an idle pattern within the received data is absent or is corrupted. For this purpose, the received data may be compared with the pre-determined idle pattern and it may be verified whether the received data comprises a segment which corresponds to the pre-determined idle pattern. If such a segment cannot be identified, it may be detected that an idle pattern within the received data is absent or is corrupted.

In particular, the received data subsequent to a first PDU and prior to a second PDU may be analyzed. The first and second PDUs may be directly adjacent to one another within a sequence of PDUs. It is expected that the data between the first PDU and the second PDU corresponds to one or more identical idle patterns. If it is detected that this is not the case, then this provides an indication for the fact that the general communication channel is impaired.

The method 300 may further comprise triggering 303 a protection and/or rerouting mechanism for the general communication channel, subject to detecting an impairment of the general communication channel. By doing this, the effects of the impairment of the general communication channel can be eliminated in a rapid manner.

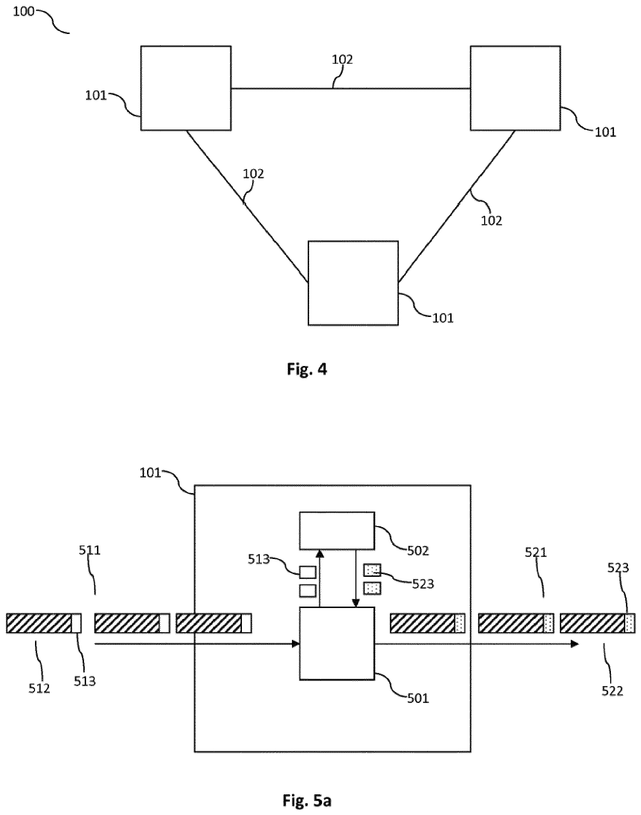

Fig. 4 shows a block diagram of an example optical transport network 100. The OTN 100 comprises a plurality of network elements 101 which are coupled with one another via communication links 102. The communication links 102 may be used to carry the optical channel data units (ODUs) described in the present document.

A network element 101 of the optical transport network 100 may be configured to receive data on a general communication channel of the OTN 100. The general communication channel may be embedded within the ODUs carried on the communication links 102. The general communication channel may employ the transmission of one or more pre-determined idle patterns at idle times of the general communication channel. The network element 101 may be configured to detect an impairment of the general communication channel by detecting that an idle pattern within the received data is absent or is corrupted. As a result of this, impairments of the general communication channel may be detected in a rapid manner.

Fig. 5a shows a block diagram of an example network element 101. The network element 101 comprises an add-drop unit 501 configured to extract one or more incoming general communication channels 513 from the incoming ODUs 512 of a sequence 513 of incoming ODUs. The extracted (i.e. dropped) general communication channels 513 may be passed to a processing unit 502. The processing unit 502 may be configured to detect an impairment of the general communication channel based on the data carried on the one or more general communication channels 513. The add-drop unit 501 may be further configured to add one or more outgoing general communication channels 523 to the outgoing ODUs 522 of a sequence 521 of outgoing ODUs. The data carried on an outgoing general communication channel 523 may differ from the data carried on an incoming general communication channel 513.

The processing unit 502 is configured to determine a deterioration of the incoming general communication channel 513 in order to submit this deterioration to the network element 101 from which the incoming general communication channel 513 originates. The submission of the deterioration is done by transmitting the deterioration pattern 554 in lieu of the valid idle pattern 544 on the outgoing general communication channel 523.

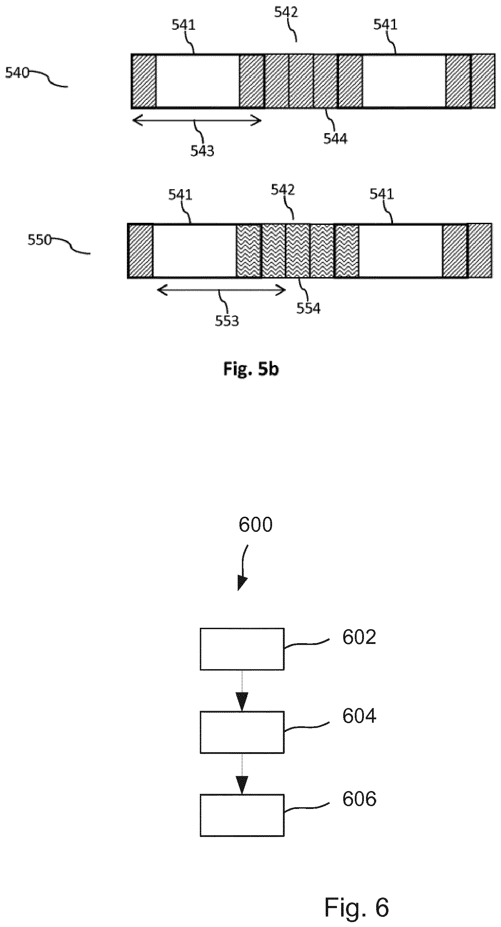

Fig. 5b illustrates data 540, 550 carried on a general communication channel. As outlined above, payload data is typically carried within so called packet data units 541. The packet data units 541 may comprise one or more flag-bytes or idle patterns 544 which may indicate the beginning and/or the ending of a packet data unit 541. Pauses between packet data units 541 are typically filled with a sequence of one or more idle patterns 544.

The processing unit 502 of a network element 101 may be configured to monitor the received data 540, 550 of a general communication channel within a time interval or analysis window 543. The time interval 543 may be used for a moving analysis window. In other words, the processing unit 502 may be configured to monitor the received data 540, 550 within a moving analysis window having a length which corresponds to the time interval 543. The time interval 543 may correspond to the temporal length of a PDU 541. The received data 540 in the upper part of Fig. 5b is valid and it can be seen that the moving analysis window always comprises at least one valid idle pattern 544. On the other hand, the received data 550 in the lower part of Fig. 5b is partially corrupted. In particular, the received data 550 comprises corrupted idle patterns 554 or deterioration patterns 554 which differ from the valid idle patterns 544. It can be seen that the received data 550 within the analysis window 553 does not comprise any valid idle patterns 554. This indicates to the processing unit 502 that the received data 50 and the general communication channel are impaired. As illustrated by Fig. 5b , the impairment detection can be performed in a rapid manner.

By using the method described in the present document, GCC failures can be detected faster than when using higher layer software protocol failure detection schemes. This allows reducing the time for triggering GCC protection/rerouting actions from several seconds down to the 10 ms range. This is particularly beneficial for OTNs which operate a control plane, as the control plain typically requires the GCC communication to be restored rapidly.

Figure 6 shows a schematic flow chart of a method 600 to operate the network element 101. In a step 602 the network element 101 receives data 540 on the incoming general communication channel 513. In a step 604 the network element 101 determines a deterioration of the incoming general communication channel 513. In a step 606 the network element 101 transmits a deterioration pattern at idle times on the outgoing general communication channel 523 in dependence on the determination of the deterioration of the incoming general communication channel 513, wherein the deterioration pattern is different from the pre-determined valid idle pattern 544.

The determination of the deterioration in step 604 comprises a determination of a bit error rate in dependence on the incoming general communication channel 513. In order to determine the bit error rate the received data 540, 550 is observed in the analysis window 543, 553 and compared with expected data. The deviations between the data in the analysis window and the expected data result in the bit error rate represented by a number of bit errors per time unit. If the bit error rate exceeds a threshold the deterioration of the observed incoming general communication channel 513 is determined.

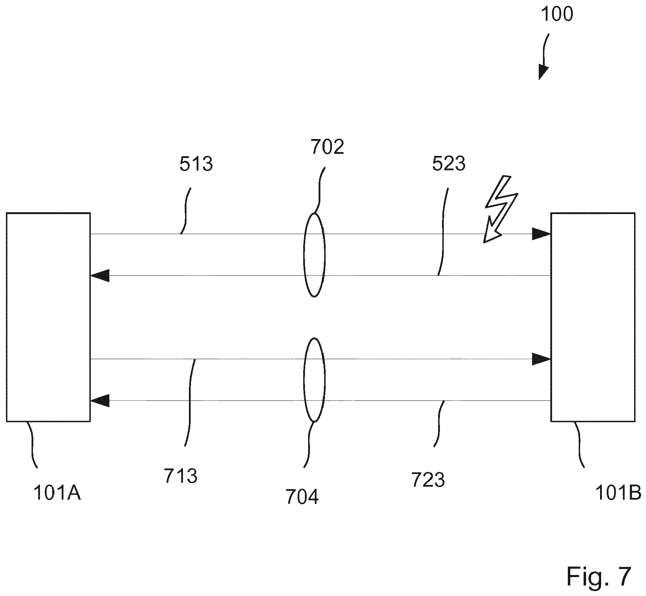

Figure 7 shows a schematic block diagram of an example OTN. The network element 101B receives the general communication channel 513 from the network element 101A and transmits the general communication channel 523 to the network element 101A. Both of the general communication channels 513 and 523 are linked to a same OTU trail 702. Further general communication channels 713 and 723 are linked to a same OTU trail 704, wherein the OTU trails 704 and 702 preferably differ. The general communication channels 713 and 723 can be considered as backup channels for switching to when determining a deterioration or complete shortfall of one of the general communication channels 513, 523.

The general communication channel 513 is subject to a deterioration, which comprises a still working general communication channel 513 but under the impact of a certain number of bit errors per time unit. When this deterioration is determined the network unit 101B starts to send deterioration patterns 554 instead of the idle patterns on the general communications channel 523. The network unit 101A detects, that the deterioration patterns 544 are different from the valid idle patterns 542 and immediately initiates a fast re-routing by selecting the general communication channel 713 for data transmission.

Upon detection of the deterioration of the general communications channel 513 the network element 101B stops a transmission of data but maintains the transmission of the deterioration pattern 554.

Instead of using the general communications channel 523 data 540 is transmitted on the general communication channel 723 in dependence on the determination of the deterioration of the general communication channel 513.

## Claims

1. A method (600) for operating a network element (101) of an optical transport network, OTN, (100); wherein a general communication channel (513; 523) employs a transmission of one or more pre-determined idle patterns (544) at idle times of general communication channels (513; 523); wherein the method comprises:
- receiving (602) data on the incoming general communication channel (513);
- determining (604) a deterioration of the incoming general communication channel (513); and
- transmitting (606) a deterioration pattern (554) at idle times on the outgoing general communication channel (523) in dependence on the determination (604) of the deterioration of the incoming general communication channel (513), wherein the deterioration pattern (554) is different from the pre-determined idle pattern (542).

2. The method (600) according to claim 1, wherein the determination (604) of the deterioration of the incoming general communication channel (513) comprises:
- determining a bit error rate in dependence on the incoming general communication channel (513); and
- determining the deterioration if the bit error rate exceeds a bit error rate threshold.

3. The method (600) according to claim 1 or 2, wherein the method further comprises:
- transmitting data on a second outgoing general communication channel (723) in dependence on the determination (604) of the deterioration of the incoming general communication channel (513).

4. The method (600) according to claim 3, wherein the second outgoing general communication channel (723) is associated with another optical transport unit, OTU, trail than the outgoing general communication channel (523) for the transmission of the deterioration pattern (554).

5. The method (600) according to claim 3 or 4, wherein the method further comprises:
- stopping a transmission of data (540, 550) on the outgoing general communication channel (523) but maintains the transmission of the deterioration pattern (554) on the outgoing general communications channel (523).

6. The method (600) according to one of the preceding claims, wherein the general communication channel (513, 523) is a General Communication Channel, GCC, of an Optical channel Data Unit, ODU, Overhead.

7. The method (600) according to one of the preceding claims, wherein the general communication channel (513) employs a High-Level Data Link Control, HDLC, framed data link protocol.

8. The method (600) of claim 7, wherein the general communication channel (513) employs a HDLC-framed Point-to-Point protocol, PPP.

9. The method (600) of any previous claim, wherein the pre-determined idle pattern (544) comprises a pre-determined bit sequence.

10. The method (600) of claim 9, wherein the pre-determined bit sequence comprises the bit sequence '01111110'.

11. A network element (101) for an optical transport network, OTN, (100); wherein a general communication channel (513; 523) employs a transmission of one or more pre-determined idle patterns (544) at idle times of general communication channels (513; 523); wherein the network element (101) is configured to:
- receive (602) data (540; 550) on the incoming general communication channel (513);
- determine (604) a deterioration of the incoming general communication channel (513); and
- transmit (606) a deterioration pattern (554) at idle times on the outgoing general communication channel (523) in dependence on the determination (604) of the deterioration of the incoming general communication channel (513), wherein the deterioration pattern (554) is different from the pre-determined idle pattern (542).

12. An optical transport network (100) comprising a plurality of network elements with at least one of the network elements (101) of the preceding claim.
